# EUROPÄISCHE PATENTSCHRIFT

(11) **EP 2 032 292 B1**
(45) Veröffentlichungstag und Bekanntmachung des Hinweises auf die Patenterteilung: **20.07.2011**
(21) Anmeldenummer: 07734793.8
(22) Anmeldetag: 04.06.2007
(51) Int. Cl.: B23B 27/06, B23B 27/16

(54) **WENDESCHNEIDPLATTE**
INDEXABLE INSERT
PLAQUETTE DE COUPE AMOVIBLE

(30) Priorität: 12.06.2006 DE 102006028062
(43) Veröffentlichungstag der Anmeldung: 11.03.2009
(73) Patentinhaber: VARGUS Ltd., 22311 Nahariya (IL)
(72) Erfinder: MORGULIS, Rafael, 21940 Karmiel (IL)
(74) Vertreter: Patentanwälte Ruff, Wilhelm, Beier, Dauster & Partner
(86) Internationale Anmeldenummer: PCT/IB2007/001516
(87) Internationale Veröffentlichungsnummer: WO 2007/144722

(56) Entgegenhaltungen:
- EP-A- 0 119 175
- WO-A-97/16277
- WO-A-2004/048021
- JP-A- 5 177 415
- US-A1- 2006 088 391

## Beschreibung

Die Erfindung betrifft eine Wendeschneidplatte, sowie ein Werkzeug umfassend eine Wendeschneidplatte und ein Verfahren zur Herstellung einer Wendeschneidplatte.

Dreieckige oder im Wesentlichen dreieckförmige Schneidplatten mit drei, in den Eckbereichen ausgeformten, Schneidzähnen sind allgemein bekannt. Die Schneidplatten können dabei als Wendeschneidplatten ausgeformt sein, wobei die Schneidzähne jeweils zwei Schneidkanten aufweisen, welche einer oberen Plattenfläche bzw. einer unteren Plattenfläche zugeordnet sind. In Span-Ablaufrichtung können dabei Spanleitflächen an beiden Seiten der Wendeschneidplatte vorgesehen sein, durch welche ein Span geformt wird. Bei einer derartigen Wendeschneidplatte können insgesamt sechs auswechselbare Schneidkanten ausgeformt werden.

Aus der US 4,572,713 ist eine quadratische Wendeschneidplatte zum Gewindeschneiden bekannt. Die quadratische Wendeschneidplatte umfasst zwei aneinander angrenzende, als Anlageflächen dienende Seitenflächen, sowie zwei den Anlageflächen gegenüberliegende, aneinander angrenzende Seitenflächen, an welchen Schneidzähne ausgebildet sind. Die Wendeschneidplatte weist nur zwei Schneidkanten auf, welche an gegenüberliegenden Plattenflächen an den Schneidzähnen ausgeformt sind, so dass durch Drehung der Wendeschneidplatte um 180° die Schneidkante austauschbar ist.

Aus der WP 97/16277 A ist ein Schneideinsatz für Gewindearbeiten mit einer dreieckförmigen Basisform und drei im wesentlichen identischen Schneidecken bekannt, wobei die Schneidecken jeweils zwei Schneidspitzen mit unterschiedlichen Überhängen von einer imaginären ersten Linie aufweisen. Die Schneidecken weisen jeweils eine Schneidkante auf, welche entlang einem Schnitt einer Spanoberfläche und einer Freifläche verläuft. Die Schneidkanten sind jeweils symmetrisch zu einer Symmetrielinie, welche parallel zu einer Seitenfläche der dreieckförmigen Basisform verläuft.

Aus der WO 2004/048021 A1 ist ein Wendeschneideinsatz zur Verwendung in einem Schneidwerkzeug für Fräsvorgänge mit rhombischen Stirnflächen, zwei ersten und zwei zweiten Schneidkanten, die jeder Stirnfläche zu geordnet sind, und zwei den Stirnflächen zugeordneten Eckschneidkanten, welche jeweils in eine erste und eine zweite Schneidkante übergehen, bekannt, wobei jede erste Schneidkante einen ersten Winkel ungleich Null und jede zweite Schneidkante einen zweiten Winkel ungleich Null bezogen auf eine Meridianebene bildet.

### Aufgabe und Lösung

Aufgabe der Erfindung ist es, eine Wendeschneidplatte und ein Werkzeug umfassend eine Wendeschneidplatte zu schaffen, wobei die Wendeschneidplatte eine hohe Flexibilität und eine hohe Festigkeit aufweist, sowie ein Verfahren zur Herstellung einer Wendeschneidplatte.

Diese Aufgabe wird durch die unabhängigen Ansprüche gelöst.

Eine erfindungsgemäße Wendeschneidplatte umfasst eine erste und eine zweite im Wesentlichen dreieckförmige Plattenfläche, drei Seitenflächen und mindestens einen, in einem Eckbereich zwischen einer ersten und einer zweiten Seitenflächen angeordneten Schneidvorsprung. Erfindungsgemäß ist der Schneidvorsprung im Wesentlichen M-förmig ausgeformt und umfasst mindestens einen ersten und einen zweiten Schneidzahn, wobei mindestens an dem ersten Schneidzahn eine erste, an einem Übergangsbereich zu der ersten Plattenfläche und mindestens an dem zweiten Schneidzahn eine zweite, an einem Übergangsbereich zu der zweiten Plattenfläche angeordnete Schneidkante ausgeformt sind und eine erste, der ersten Schneidkante zugeordnete Span-Ablaufrichtung mit einer zweiten, der zweiten Schneidkante zugeordneten Span-Ablaufrichtung einen Winkel bildet. Erfindungsgemäß sind weiter der ersten und der zweiten Schneidkante eine erste bzw. eine zweite Spanleitfläche in der jeweiligen Span-Ablaufrichtung zugeordnet, wobei die erste Spanleitfläche mindestens eine erste Nut auf der ersten Plattenfläche umfasst, die sich im Wesentlichen senkrecht zu der ersten Span-Ablaufrichtung zwischen der ersten Seitenfläche und der zweiten Seitenfläche erstreckt, und die zweite Spanleitfläche mindestens eine zweite Nut auf der zweiten Plattenfläche umfasst, die sich im Wesentlichen senkrecht zu der zweiten Span-Ablaufrichtung zwischen der ersten Seitenfläche und der zweiten Seitenfläche erstreckt.

Eine derartige Wendeschneidplatte ist äußerst flexibel, wobei je nach Ausgestaltung bis zu sechs Schneidkanten durch Drehen und/oder Wenden der Wendeschneidplatte in Einsatz gebracht werden können.

Der symmetrische M-förmige Schneidvorsprung ist durch geeignete Werkzeuge unter Angabe weniger Geometriedaten einfach fertigbar. Die Schneidkanten sind an den Übergängen zu der ersten und der zweiten Plattenfläche ausgeformt, wobei den Schneidkanten jeweils eine Spanleitfläche zur Spanverformung zugeordnet ist. Die Spanleitflächen sind durch Ausformen von Nuten, die zwischen den Seitenflächen verlaufenden, ebenfalls einfach und mit hoher Präzision fertigbar. Die im Wesentlichen senkrecht zu den sich schneidenden Span-Ablaufrichtungen ausgeformten Nuten verlaufen ebenfalls nicht parallel, sondern schneiden einander. Dadurch wird eine Schwächung der Wendeschneidplatte in einem Querschnitt vermieden.

In Weiterbildung der Erfindung ist die Wendeschneidplatte im Wesentlichen symmetrisch bezüglich einer dem Schneidvorsprung zugeordneten Seitenhalbierenden, so dass durch eine 180°- Drehung der Wendeschneidplatte um die Seitenhalbierende die Wendeschneidplatte auf sich selbst abbildbar ist. Dadurch ist eine einfache Fertigung unter Angabe nur weniger Geometriedaten möglich. Außerdem ist durch Wenden der Wendeschneidplatte diese ohne Änderungen in der Einspannung und/oder des Vorschubs einsetzbar.

In Ausgestaltung der Erfindung liegt ein an der ersten Seitenfläche angeordneter Zahngrund des ersten Schneidzahns und/oder ein an der zweiten Seitenfläche angeordneter Zahngrund des zweiten Schneidzahns zumindest teilweise außerhalb des Bereichs der zweiten bzw. der ersten Spanleitfläche. Der Zahngrund des ersten Schneidzahns liegt somit zumindest teilweise in der Ebene der der Schneidkante gegenüberliegenden Plattenfläche. Daher kann der Zahngrund zum Abstützen des ersten Schneidzahns bei Einsatz des ersten Schneidzahns eingesetzt werden. Dadurch ist ein Abstützen in der Nähe der Schneidkante möglich. Gleiches gilt für den zweiten Schneidzahn. Die Schneidzähne der Wendeschneidplatte sind daher im Einsatz besonders gut abstützbar.

In einer Weiterbildung der Erfindung sind die Schneidzähne so angeordnet sind, dass eine Span-Ablaufrichtung des ersten Schneidzahns im Wesentlichen parallel zu der zweiten Seitenfläche und eine Span-Ablaufrichtung des zweiten Schneidzahns im Wesentlichen parallel zu der ersten Seitenfläche ist. Dadurch ist eine besonders einfache Ausformung möglich.

In einer weiteren Ausgestaltung der Erfindung erstreckt sich die erste Spanleitfläche im Wesentlichen senkrecht zu der zweiten Seitenfläche und/oder die zweite Spanleitfläche im Wesentlichen senkrecht zu der ersten Seitenfläche. Bei einer derartigen Ausgestaltung ist durch geeignete Einspannung eine besonders vorteilhafte Fertigung der Wendeschneidplatte möglich.

In einer anderen Ausgestaltung liegen die Spitzen des ersten bzw. des zweiten Schneidzahns im Wesentlichen in einer Ebene der ersten bzw. der zweiten Seitenfläche des Schneidvorsprungs. Dadurch ist eine gute Auflage der Wendeschneidplatte auf einem Werkzeug oder einer Auflageplatte beim Schneiden gegeben. Die Wendeschneidplatte ist dabei derart auf einem Werkzeughalter anordenbar, dass lediglich der in Einsatz befindliche Schneidzahn nicht aufliegt.

In einer Weiterführung der Erfindung weisen die erste und die zweite Seitenfläche jeweils mindestens eine Anlagefläche für einen Werkzeughalter auf. Die Anlageflächen ermöglichen eine gute Halterung in der Nähe der Schneidkante. Durch Verwendung der Seitenfläche als Anlagefläche ist weiter eine platz- und/oder materialsparende Ausführung möglich.

In einer anderen Ausgestaltung umfasst mindestens eine Spanleitfläche eine in Span-Ablaufrichtung an die Schneidkante anschließende, abgeschrägte Leitfläche und eine konkave Leitfläche. Durch eine derartige Spanleitfläche ist eine gute Spanverformung möglich. Ein Winkel der abgeschrägten Leitfläche gegenüber der Horizontalen und/oder der Plattenfläche liegt dabei in einer Ausführungsform zwischen 5° und 70°, insbesondere zwischen 10° und 30°. Durch geeignete Spanleitflächen wird erreicht, dass ein beim Schneiden eines Werkstücks entstehender Span ungebrochen, langgestreckt und in zahlreichen zusammenhängenden Wendeln abläuft.

In einer weiteren Ausgestaltung der Erfindung ist zwischen mindestens einem Scheidzahn und der zugehörigen Seitenfläche ein Nebenschneidzahn ausgeformt. Durch den Nebenschneidzahn ist die Qualität beim Schneiden verbesserbar.

In einer vorteilhaften Ausgestaltung sind die Schneidkanten als Nutprofil-Schneidkanten, insbesondere als Gewindeprofil-Schneidkanten zur Gewindeherstellung durch Dreh- oder Fräsbearbeitung, ausgeformt.

Die erfindungsgemäße Aufgabe wird weiter durch ein Werkzeug umfassend einen Werkzeughalter und eine oben beschriebene Wendeschneidplatte gelöst, wobei mindestens zwischen einem Einsatz des ersten Schneidzahns in einer Einsatzstellung und einem Einsatz des zweiten Schneidzahns in einer Einsatzstellung durch Wenden der Wendeschneidplatte variierbar ist. In einer vorteilhaften Ausgestaltung kann zwischen sechs Einsatzstellungen der Wendeschneidplatte durch Drehen und Wenden der Wendeschneidplatte gewechselt werden.

In einer Ausgestaltung der Erfindung liegt die der Schneidkante gegenüberliegende Plattenfläche der Wendeschneidplatte mindestens teilweise in einem Zahngrund eines Schneidzahns in der Einsatzstellung auf dem Werkzeughalter und/oder einem Amboss auf. Dadurch ist eine gute Halterung des eingesetzten Schneidzahns durch Auflage nahe der Schneidkante möglich.

In einer weiteren Ausgestaltung der Erfindung umfasst das Werkzeug einen im Wesentlichen dreieckförmigen Amboss, wobei eine dem in Einsatzstellung befindlichen Schneidzahn zugeordnete Ecke des Amboss abgeflacht ist. Die Auflageplatte ermöglicht eine gute Halterung der erfindungsgemäßen Wendescheidplatte.

Die Aufgabe wird außerdem gelöst durch ein Verfahren zur Herstellung einer Wendeschneidplatte mit einer ersten und einer zweiten im Wesentlichen dreieckförmigen Plattenfläche und drei Seitenflächen, wobei in mindestens einem Eckbereich zwischen einer ersten und einer zweiten Seitenflächen ein Schneidvorsprung ausgeformt wird, der eine erste, an einem Übergangsbereich zu der ersten Plattenfläche und eine zweite, an einem Übergangsbereich zu der zweiten Plattenfläche angeordnete Schneidkante umfasst. Erfindungsgemäß wird der Schneidvorsprung im Wesentlichen M-förmig mit mindestens einem ersten und einem zweiten Schneidzahn und mindestens an dem ersten Schneidzahn eine erste Schneidkante an einem Übergangsbereich zu der ersten Plattenfläche sowie mindestens an dem zweiten Schneidzahn eine zweite Schneidkante an einem Übergangsbereich zu der zweiten Plattenfläche ausgeformt, wobei eine erste, der ersten Schneidkante zugeordnete Span-Ablaufrichtung mit einer zweiten, der zweiten Schneidkante zugeordneten Span-Ablaufrichtung einen Winkel bildet und der ersten und der zweiten Schneidkante eine erste bzw. eine zweite Spanleitfläche in Span-Ablaufrichtung zugeordnet sind. Die erste Spanleitfläche wird mit mindestens einer erste Nut auf der ersten Plattenfläche ausgeformt, die sich im Wesentlichen senkrecht zu der ersten Span-Ablaufrichtung zwischen der ersten Seitenfläche und der zweiten Seitenfläche erstreckt, und die zweite Spanleitfläche wird mit mindestens einer zweite Nut auf der zweiten Plattenfläche ausgeformt wird, die sich im Wesentlichen senkrecht zu der zweiten Span-Ablaufrichtung zwischen der ersten Seitenfläche und der zweiten Seitenfläche erstreckt.

Die vorstehenden und weiteren Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im Folgenden näher erläutert. Es zeigen:
- Fig. 1: eine perspektivische Ansicht einer Wendeschneidplatte nach der Erfindung,
- Fig. 2: eine Draufsicht auf die Wendeschneidplatte gemäß Fig. 1,
- Fig.3: eine Explosionsdarstellung eines Werkzeugs umfassend eine Wendeschneidplatte gemäß Fig. 1,
- Fig. 4: eine perspektivische Ansicht des Werkzeugs gemäß Fig. 3, und
- Fig. 5: ein Detail des Werkzeugs gemäß Fig. 4.

### Beschreibung von Ausführungsbeispielen

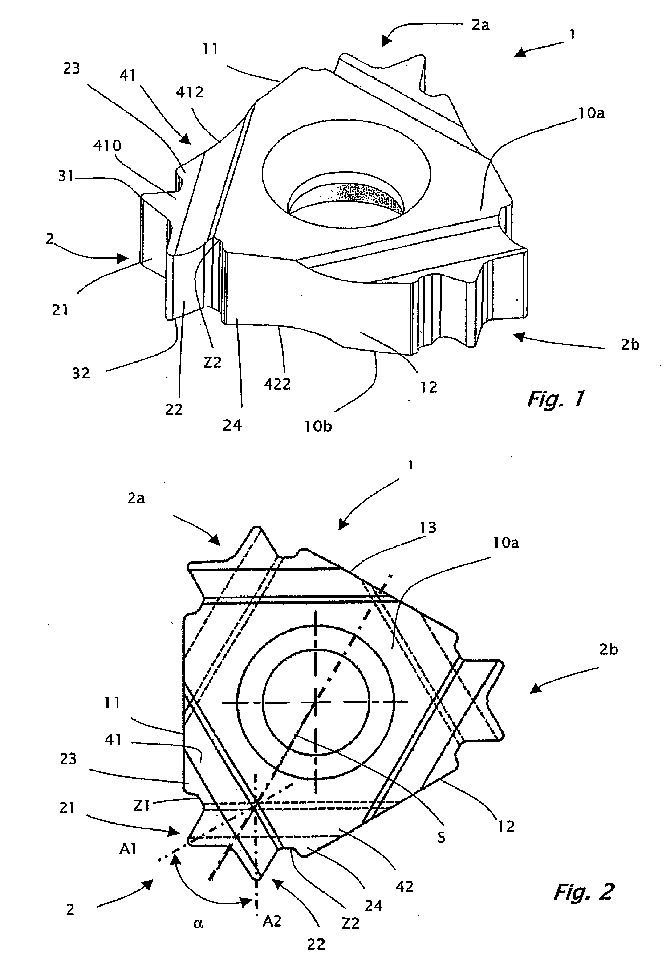

Fig. 1 und 2 zeigten schematisch eine perspektivische Darstellung und eine Draufsicht auf eine Wendeschneidplatte 1. Es handelt sich dabei um eine Schneidplatte mit einer Profilschneide, insbesondere ein Werkzeug zur Gewindeherstellung durch Dreh- oder Fräsbearbeitung. Die Wendeschneidplatte 1 umfasst eine erste, im Wesentlichen dreieckförmige Plattenfläche 10a sowie eine in Fig. 1 und 2 verdeckte, zweite, im Wesentlichen dreieckförmige Plattenfläche 10b. Die Wendeschneidplatte 1 umfasst weiter drei Seitenflächen 11, 12, 13 sowie zwischen den Seitenflächen 11, 12 13 angeordnete, M-förmige Schneidvorsprünge 2, 2a, 2b. Die Schneidvorsprünge 2, 2a, 2b umfassen jeweils einen ersten Schneidzahn 21 und einen zweiten Schneidzahn 22, die im Wesentlichen symmetrisch bezüglich einer nicht dargestellten Fläche angeordnet sind, die entlang einer dem jeweiligen Schneidvorsprung 2 zugeordneten Seitenhalbierenden S senkrecht zu den Plattenflächen 10a, 10b aufgespannt ist. In der dargestellten Ausführungsform ist zwischen den Schneidzähnen 21, 22 und den jeweils zugehörigen Seitenflächen 11, 12 jeweils ein Nebenschneidzahn 23, 24 ausgeformt.

An dem ersten Schneidzahn 21 ist im Übergangsbereich zu der ersten Plattenfläche 10a eine erste Schneidkante 31 ausgeformt. Ebenso ist an dem zweiten Schneidzahn 32 im Übergangsbereich zu der zweiten Plattenfläche 10b eine zweite Schneidkante 32 ausgeformt. In der dargestellten Ausführungsform sind auch die Nebenschneidzähne 23, 24 von den Schneidkanten 31, 32 umfasst.

Im Einsatz der Wendeschneidplatte 1 läuft ein Span eines nicht dargestellten Werkzeugs nach seiner Ablösung durch den ersten Schneidzahn 21 in einer Span-Ablaufrichtung A1 ab. Nach einer Ablösung durch den zweiten Schneidzahn 22 läuft ein Span in einer Span-Ablaufrichtung A2 entlang der verdeckten Plattenfläche 10b ab. Die Span-Ablaufrichtungen A1, A2 schneiden einander auf der Seitenhalbierenden mit einem Winkel α. In anderen, nicht dargestellten Ausführungsformen sind die Schneidzähne davon abweichend angeordnet, wobei die Span-Ablaufrichtungen jedoch ebenfalls einen Winkel miteinander einschließen. Die Schneidzähne 21, 22 sind in der dargestellten Ausführungsform so angeordnet, dass die Span-Ablaufrichtung A1 des ersten Schneidzahns 21 im Wesentlichen parallel zu der zweiten Seitenfläche 12 ist. Desgleichen ist die Span-Ablaufrichtung A2 des zweiten Schneidzahns 22 im Wesentlichen parallel zu der ersten Seitenfläche 11.

Den Schneidkanten 31, 32 sind Spanleitflächen 41, 42 in der jeweiligen Span-Ablaufrichtung A1, A2 zugeordnet, durch welche Späne eines nicht dargestellten Werkzeugs geeignet geformt werden. Die Spanleitflächen 41, 42 sind an der ersten bzw. der zweiten Plattenfläche 10a, 10b als Nuten ausgeformt. Die erste Spanleitfläche 41 erstreckt sich in der dargestellten Ausführungsform im Wesentlichen senkrecht zu der zweiten Seitenfläche 12. Die in Fig. 1 und 2 verdeckte zweite Spanleitfläche 42, dargestellt durch gestrichelte Linien in Fig. 2, erstreckt sich im Wesentlichen senkrecht zu der ersten Seitenfläche 11. Die Spanleitflächen 41, 42 sind durch derartige Nuten besonders einfach fertigbar. Da die Spanleitflächen 41, 42 nicht parallel verlaufen, wird die Wendeschneidplatte 1 nicht in einem Querschnitt an beiden Plattenflächen 10a, 10b geschwächt. In der dargestellten Ausführungsform umfassen die Spanleitflächen 41, 42 eine in Span-Ablaufrichtung an die Schneidkanten 31, 32 anschließende, abgeschrägte Leitfläche 410, sowie eine daran anschließende konkave Leitfläche 412, 422. Durch eine derartig geformte Spanleitfläche 41, 42 ist eine gute Spanverformung möglich. Wie aus Fig. 1 und 2 erkennbar, verlaufen die Spanleitflächen 41, 42 derart, dass ein Zahngrund Z1 des ersten Schneidzahns 21 zumindest teilweise außerhalb der zweiten Spanleitfläche 42 liegt und ein Zahngrund Z2 des zweiten Schneidzahns 22 zumindest teilweise außerhalb der ersten Spanleitfläche 41 liegt. Der Zahngrund Z1 und der Zahngrund Z2 liegen damit zumindest teilweise in einer Ebene der zweiten bzw. der ersten Plattenfläche 10b, 10a. Die Schneidzähne 21, 22 können somit auf einer ebenen Auflage zumindest teilweise im Zahngrund Z1, Z2 abgestützt werden.

Die Spitzen des ersten und des zweiten Schneidzahns 21, 22 liegen in der dargestellten Ausführungsform im Wesentlichen in einer Ebene der ersten bzw. der zweiten Seitenfläche 11, 12 des Schneidvorsprungs 2. Dadurch können die Spitzen nicht im Einsatz befindlicher Schneidzähne geschützt werden.

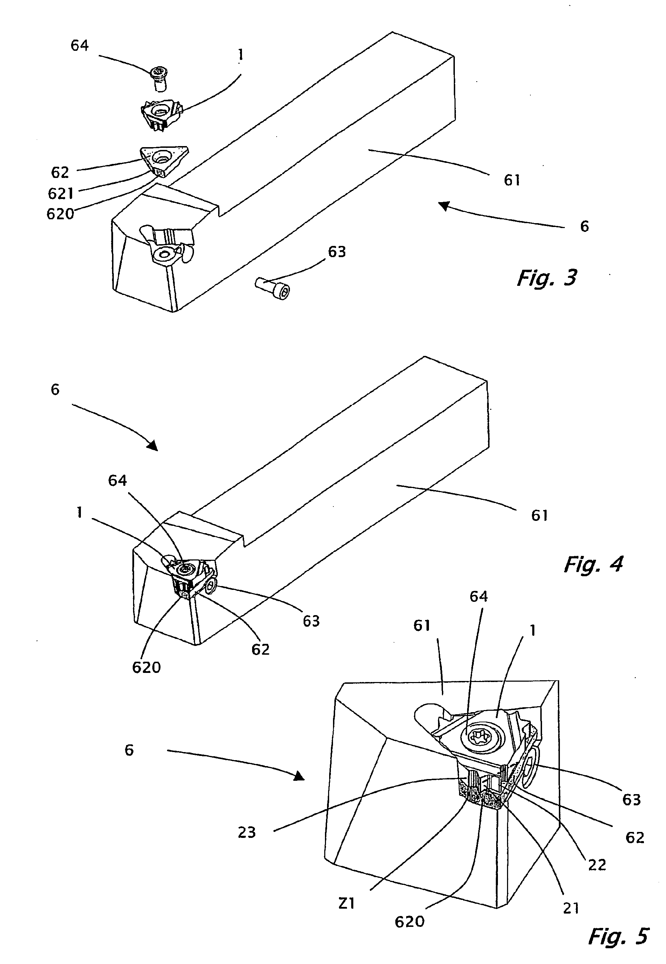

Die dargestellte Wendeschneidplatte 1 ist im Wesentlichen gleichseitig dreieckförmig, wobei die Seitenflächen 11, 12, 13 im Wesentlichen eben sind. In anderen Ausführungsformen können die Seitenflächen konvexe oder konkave Abschnitte aufweisen. Die Seitenflächen 11, 12, 13 können jeweils als Anlagefläche für einen in Fig. 3 dargestellten Werkzeughalter dienen.

Fig. 3, 4 und 5 zeigen eine schematische Explosionsdarstellung, ein Zusammenbau und ein Detail eines Werkzeugs 6, umfassend die in den Fig. 1 und 2 dargestellte Wendeschneidplatte 1 sowie einen Werkzeughalter 61, einen Amboss 62 und Spanschrauben 63, 64. Die Wendeschneidplatte 1 wird mittels des Amboss 62 und der Spanschraube 64 mit dem Werkzeughalter 61 verbunden. Die Verbindung erfolgt auf herkömmliche Art und Weise, wobei, wie dargestellt, die Schraube 64 exzentrisch aufgenommen sein kann.

Wie am besten in Fig. 5 erkennbar, liegt die Wendeschneidplatte 1 an den Seitenflächen 11, 13 an dem Werkzeughalter 61 an. Der Amboss 62 ist im Wesentlichen dreieckförmig ausgeformt, wobei ein Eckbereich 620 der Auflageplatte 62 abgeflacht ist. Die Wendeschneidplatte 1 wird derart auf dem Amboss 62 aufgebracht, dass der für den Einsatz bestimmte Schneidzahn 21 über den Amboss 62 heraus steht.

Eine hintere Kante der verdeckten, an der zweiten Plattenfläche 10b ausgeformten, zweiten Spanleitfläche 42 gemäß Fig. 1 und 2 ist in Fig. 5 durch eine Strich-Punkt-Linie angedeutet. Wie aus dem Verlauf der Strich-Punkt-Linie erkennbar ist, ermöglicht der Verlauf der Spanleitfläche 42, dass der Schneidzahn 21 an einem Zahngrund Z1 auf dem Amboss 62 aufliegt. Dadurch wird der Schneidzahn 21 im Einsatz sicher abgestützt.

Der zweite, in der dargestellten Ausführungsform nicht im Einsatz befindliche Schneidzahn 22 sowie weitere nicht eingesetzte Schneidzähne liegen vollständig im Bereich des Amboss 62. Der Schneidzahn 22 und die weiteren Schneidzähne sind so sicher gegen Beschädigung schützbar.

Der dargestellte Amboss 62 weist an dem abgeflachten Eckbereich 620 einen in Fig. 3 sichtbaren Vorsprung 621 auf, auf welchem sich ein Nebenschneidzahn 23 in der dargestellten Ausführungsform abstützt.

Wie aus den Fig. 3 bis 5 erkennbar, ist die dargestellte Wendeschneidplatte 1 durch Wenden und/oder Drehen in sechs verschiedenen Ausrichtungen an dem Werkzeughalter 61 anbringbar, wobei in jeder Ausrichtung ein andere Schneidzahn im Einsatz ist.

## Patentansprüche

1. Wendeschneidplatte mit einer ersten und einer zweiten im Wesentlichen dreieckförmigen Plattenfläche (10a, 10b), drei Seitenflächen (11, 12, 13) und mindestens einem, in einem Eckbereich zwischen einer ersten und einer zweiten Seitenflächen (11, 12) angeordneten Schneidvorsprung (2),
wobei der Schneidvorsprung (2) im Wesentlichen M-förmig ausgeformt ist und mindestens einen ersten und einen zweiten Schneidzahn (21, 22) umfasst, **dadurch gekennzeichnet, dass**
mindestens an dem ersten Schneidzahn (21) eine erste, an einem Übergangsbereich zu der ersten Plattenfläche (10a) und mindestens an dem zweiten Schneidzahn (22) eine zweite, an einem Übergangsbereich zu der zweiten Plattenfläche (10b) angeordnete Schneidkante (31, 32) ausgeformt sind, wobei eine erste, der ersten Schneidkante (31) zugeordnete Span-Ablaufrichtung (A1) mit einer zweiten, der zweiten Schneidkante (32) zugeordneten Span-Ablaufrichtung (A2) einen Winkel (α) bildet,
der ersten und der zweiten Schneidkante (31, 32) eine erste bzw. eine zweite Spanleitfläche (41, 42) in Span-Ablaufrichtung zugeordnet sind,
die erste Spanleitfläche (41) mindestens eine erste Nut auf der ersten Plattenfläche (10a) umfasst, die sich im Wesentlichen senkrecht zu der ersten Span-Ablaufrichtung (A1) zwischen der ersten Seitenfläche (11) und der zweiten Seitenfläche (12) erstreckt, und
die zweite Spanleitfläche (42) mindestens eine zweite Nut auf der zweiten Plattenfläche (10b) umfasst, die sich im Wesentlichen senkrecht zu der zweiten Span-Ablaufrichtung zwischen der ersten Seitenfläche (11) und der zweiten Seitenfläche (12) erstreckt.

2. Wendeschneidplatte nach Anspruch 1, **dadurch gekennzeichnet, dass** die Wendeschneidplatte (1) im Wesentlichen symmetrisch bezüglich einer dem Schneidvorsprung (2) zugeordneten Seitenhalbierenden (S) ist, so dass durch eine 180°- Drehung der Wendeschneidplatte (1) um die Seitenhalbierende (S) die Wendeschneidplatte (1) auf sich abbildbar ist.

3. Wendeschneidplatte nach Anspruch 1 oder 2, **dadurch gekennzeichnet, dass** ein an der ersten Seitenfläche (11) angeordneter Zahngrund (Z1) des ersten Schneidzahns (21) und/oder ein an der zweiten Seitenfläche (12) angeordneter Zahngrund (Z2) des zweiten Schneidzahns (22) zumindest teilweise außerhalb des Bereichs der zweiten bzw. der ersten Spanleitfläche (42, 41) liegt.

4. Wendeschneidplatte nach Anspruch 1, 2 oder 3, **dadurch gekennzeichnet, dass** die Schneidzähne (21, 22) so angeordnet sind, dass eine Span-Ablaufrichtung (A1) des ersten Schneidzahns (21) im Wesentlichen parallel zu der zweiten Seitenfläche (12) und eine Span-Ablaufrichtung des zweiten Schneidzahns im Wesentlichen parallel zu der ersten Seitenfläche (11) ist.

5. Wendeschneidplatte nach Anspruch 4, **dadurch gekennzeichnet, dass** die erste Spanleitfläche (41) sich im Wesentlichen senkrecht zu der zweiten Seitenfläche (12) erstreckt und/oder die zweite Spanleitfläche (42) sich im Wesentlichen senkrecht zu der ersten Seitenfläche (11) erstreckt.

6. Wendeschneidplatte nach einem der Ansprüche 1 bis 5, **dadurch gekennzeichnet, dass** die Spitzen des ersten und/oder des zweiten Schneidzahns (21, 22) im Wesentlichen in einer Ebene der ersten bzw. der zweiten Seitenfläche (11, 12) des Schneidvorsprungs liegen.

7. Wendeschneidplatte nach einem der Ansprüche 1 bis 6, **dadurch gekennzeichnet, dass** die erste und die zweite Seitenfläche (11, 12) jeweils mindestens eine Anlagefläche (110, 120) für einen Werkzeughalter aufweisen.

8. Wendeschneidplatte nach einem der Ansprüche 1 bis 7, **dadurch gekennzeichnet, dass** die Spanleitfläche (41, 42) mindestens eine in Span-Ablaufrichtung (A1) an die Schneidkante (31, 32) anschließende, abgeschrägte Leitfläche (410, 420) und eine konkave Leitfläche (412, 422) umfasst.

9. Wendeschneidplatte nach einem der Ansprüche 1 bis 8, **dadurch gekennzeichnet, dass** zwischen mindestens einem Scheidzahn (21, 22) und der zugehörigen Seitenfläche (11, 12) ein Nebenschneidzahn (23, 24) ausgeformt ist.

10. Wendeschneidplatte nach einem der Ansprüche 1 bis 9, **dadurch gekennzeichnet, dass** die Schneidkanten als Nutprofil-Schneidkanten, insbesondere als Gewindeprofil-Schneidkanten zur Gewindeherstellung durch Dreh- oder Fräsbearbeitung, ausgeformt sind.

11. Wendeschneidplatte nach einem der Ansprüche 1 bis 10, **dadurch gekennzeichnet, dass** eine Schneidkante (31) auf einer Seite des ersten und/oder des zweiten Schneidzahnes (21, 22) angeordnet ist und die zweite Schneidkante (32) an der anderen Seite desselben Schneidzahns (21, 22) angeordnet ist.

12. Werkzeug umfassend einen Werkzeughalter und eine Wendeschneidplatte nach einem der Ansprüche 1 bis 11, wobei mindestens zwischen einem Einsatz des ersten Schneidzahns (21) in einer Einsatzstellung und einem Einsatz des zweiten Schneidzahns (22) in einer Einsatzstellung durch Wenden der Wendeschneidplatte (1) variierbar ist.

13. Werkzeug nach Anspruch 12, **dadurch gekennzeichnet, dass** die der Schneidkante (31, 32) gegenüberliegenden Plattenfläche (12, 11) der Wendeschneidplatte (1) mindestens teilweise in einem Zahngrund (Z1, Z2) eines Schneidzahns (21, 22) in der Einsatzstellung auf dem Werkzeughalter (61) und/oder einem Amboss (63) aufliegt.

14. Werkzeug nach Anspruch 12 oder 13, umfassend einen im Wesentlichen dreieckförmigen Amboss (63), wobei eine dem in Einsatzstellung befindlichen Schneidzahn (21, 22) zugeordnete Ecke (630) des Amboss abgeflacht ist.

15. Verfahren zur Herstellung einer Wendeschneidplatte mit einer ersten und einer zweiten im Wesentlichen dreieckförmigen Plattenfläche (10a, 10b) und drei Seitenflächen (11, 12, 13), wobei in mindestens einem Eckbereich zwischen einer ersten und einer zweiten Seitenflächen (11, 12) ein Schneidvorsprung (2) ausgeformt wird, der eine erste, an einem Übergangsbereich zu der ersten Plattenfläche (10a) und eine zweite, an einem Übergangsbereich zu der zweiten Plattenfläche (10b) angeordnete Schneidkante (31, 32) umfasst,
**dadurch gekennzeichnet, dass**
der Schneidvorsprung (2) im Wesentlichen M-förmig mit mindestens einem ersten und einem zweiten Schneidzahn (21, 22) ausgeformt wird, mindestens an dem ersten Schneidzahn (21) eine erste Schneidkante (31) an einem Übergangsbereich zu der ersten Plattenfläche (10a) und mindestens an dem zweiten Schneidzahn (22) eine zweite Schneidkante (32) an einem Übergangsbereich zu der zweiten Plattenfläche (10b) ausgeformt wird, wobei eine erste, der ersten Schneidkante (31) zugeordnete Span-Ablaufrichtung (A1) mit einer zweiten, der zweiten Schneidkante (32) zugeordneten Span-Ablaufrichtung einen Winkel bildet und der ersten und der zweiten Schneidkante (31, 32) eine erste bzw. eine zweite Spanleitfläche (41, 42) in Span-Ablaufrichtung zugeordnet sind,
die erste Spanleitfläche (41) mit mindestens einer ersten Nut auf der ersten Plattenfläche (10a) ausgeformt wird, die sich im Wesentlichen senkrecht zu der ersten Span-Ablaufrichtung (A1) zwischen der ersten Seitenfläche (11) und der zweiten Seitenfläche (12) erstreckt, und
die zweite Spanleitfläche (42) mit mindestens einer zweiten Nut auf der zweiten Plattenfläche (10b) ausgeformt wird, die sich im Wesentlichen senkrecht zu der zweiten Span-Ablaufrichtung zwischen der ersten Seitenfläche (11) und der zweiten Seitenfläche (12) erstreckt.

## Claims

1. Indexable insert with a first and a second substantially triangular insert surface (10a, 10b), three side faces (11, 12, 13) and at least one cutting projection (2) located in a corner region between the first and second side faces (11, 12), the cutting projection (2) being substantially M-shaped and comprising at least one first and one second cutting tooth (21, 22), **characterized in that**
at least on the first cutting tooth (21) a first cutting edge (31, 32) in a transition region to the first insert surface (10a) and at least on the second cutting tooth (22) a second cutting edge (31, 32) in a transition region to the second insert surface (10b) are provided, wherein a first chip removal direction (A1) associated with the first cutting edge (31) forming an angle (α) with a second chip removal direction (A2) associated with the second cutting edge (32),
the first and second cutting edges (31, 32) are respectively associated with a first and a second chip guide surface (41, 42) in the chip removal direction,
the first chip guide surface (41) having at least one first groove on the first insert surface (10a) extending substantially perpendicular to the first chip removal direction (A1) between the first side face (11) and the second side face (12), and
the second chip guide surface (42) having at least one second groove on the second insert surface (10b) extending substantially perpendicular to the second chip removal direction between the first side face (11) and the second side face (12).

2. Indexable insert according to claim 1, **characterized in that** the indexable insert (1) is substantially symmetrical with respect to a median (S) associated with cutting projection (2), so that by a 180° rotation of the indexable insert (1) about median (S) said indexable insert can be imaged on itself.

3. Indexable insert according to claims 1 or 2, **characterized in that** a tooth root surface (Z1) of the first cutting tooth (21) located on the first side face (11) and/or a tooth root surface (Z2) of the second cutting tooth (22) located on the second side face (12) is at least partly located outside the area of the second or first chip guide surfaces (42, 41), respectively.

4. Indexable insert according to claims 1, 2 or 3, **characterized in that** the cutting teeth (21, 22) are so positioned that a chip removal direction (A1) of the first cutting tooth (21) is substantially parallel to the second side face (12) and a chip removal direction of the second cutting tooth is substantially parallel to the first side face (11).

5. Indexable insert according to claim 4, **characterized in that** the first chip guide surface (41) extends substantially perpendicular to the second side face (12) and/or the second chip guide surface (42) extends substantially perpendicular to the first side face (11).

6. Indexable insert according to one of the claims 1 to 5, **characterized in that** the crests of the first and/or second cutting teeth (21, 22) are substantially located in a plane of the first and second side faces (11, 12), respectively, of the cutting projection.

7. Indexable insert according to one of the claims 1 to 6, **characterized in that** the first and second side faces (11, 12) in each case have at least one abutment surface (110, 120) for a tool holder.

8. Indexable insert according to one of the claims 1 to 7, **characterized in that** the chip guide surface (41, 42) comprises at least one bevelled guide surface (410, 420) and a concave guide surface (412, 422) adjoining on to the cutting edge (31, 32) in the chip removal direction (A1).

9. Indexable insert according to one of the claims 1 to 8, **characterized in that** a secondary cutting tooth (23, 24) is formed between at least one cutting tooth (21, 22) and the associated side face (11, 12).

10. Indexable insert according to one of the claims 1 to 9, **characterized in that** the cutting edges are in the form of groove profile cutting edges, particularly thread profile cutting edges for producing threads by turning or milling.

11. Indexable insert according to one of the claims 1 to 10, **characterized in that** a cutting edge (31) is arranged on one side of the first and/or second cutting tooth (21, 22) and the second cutting edge (32) is arranged on the other side of the same cutting tooth (21, 22).

12. Tool comprising a tool holder and an indexable insert according to one of the claims 1 to 11, wherein a variation at least between a use of the first cutting tooth (21) in a use position and a use of the second cutting tooth (22) in a use position is possible by indexing the indexable insert (1).

13. Tool according to claim 12, **characterized in that** the insert surface (12, 11) of the indexable insert (1) facing the cutting edge (31, 32) rests at least partly in a tooth root surface (Z1, Z2) of a cutting tooth (21, 22) in the use position on tool holder (61) and/or an anvil (63).

14. Tool according to claim 12 or 13, comprising a substantially triangular anvil (63), a corner (630) of the anvil associated with the cutting tooth (21, 22) in the use position being flattened.

15. Method of production of an indexable insert with a first and a second substantially triangular insert surface (10a 10b) and three side faces (11, 12, 13), a cutting projection (2) being formed in at least one corner region between a first and a second side face (11, 12) and comprising a first cutting edge (31, 32) in a transition region to the first insert surface (10a) and a second cutting edge (31, 32) in a transition region to the second insert surface (10b),
**characterized in that**
the cutting projection (2) is formed substantially M-shaped with at least one first and one second cutting tooth (21, 22), at least on the first cutting tooth (21) is formed a first cutting edge (31) in a transition region to the first insert surface (10a) and at least on the second cutting tooth (22) a second cutting edge (32) is formed in a transition region to the second insert surface (10b), wherein a first chip removal direction (A1) associated with the first cutting edge (31) encloses an angle with a second chip removal direction associated with the second cutting edge (32) and wherein the first and second cutting edges (31, 32) are respectively associated with a first and a second chip guide surface (41, 42) located in the chip removal direction,
the first chip guide surface (41) is formed with at least one first groove on the first insert surface (10a) extending substantially perpendicular to the first chip removal direction (A1) between the first side face (11) and the second side face (12), and
the second chip guide surface (42) is formed with at least one second groove on the second insert surface (10b) extending substantially perpendicular to the second chip removal direction between the first side face (11) and the second side face (12).

## Revendications

1. Plaquette de coupe amovible comprenant une première et une deuxième surface de plaquette (10a, 10b) de forme essentiellement triangulaire, trois surfaces latérales (11,12, 13) et au moins une saillie de coupe (2) disposée dans une région de coin entre une première et une deuxième surface latérale (11,12),
la saillie de coupe (2) étant formée essentiellement en forme de M et comprenant au moins une première et une deuxième dent de coupe (21, 22), **caractérisée en ce**
**qu'**une première arête de coupe (31) est façonnée au moins sur la première dent de coupe (21) au niveau d'une région de transition à la première surface de plaquette (10a) et une deuxième arête de coupe (32) est façonnée au moins sur la deuxième dent de coupe (22) au niveau d'une région de transition à la deuxième surface de plaquette (10b), une première direction d'évacuation des copeaux (A1) associée à la première arête de coupe (31) formant un angle (α) avec une deuxième direction d'évacuation des copeaux (A2) associée à la deuxième arête de coupe (32),
la première et la deuxième arête de coupe (31, 32) étant associées à une première ou une deuxième surface de guidage des copeaux (41, 42) dans la direction d'évacuation des copeaux,
la première surface de guidage des copeaux (41) comprenant au moins une première rainure sur la première surface de plaquette (10a), laquelle s'étend essentiellement perpendiculairement à la première direction d'évacuation des copeaux (A1) entre la première surface latérale (11) et la deuxième surface latérale (12), et
la deuxième surface de guidage des copeaux (42) comprenant au moins une deuxième rainure sur la deuxième surface de plaquette (10b), laquelle s'étend essentiellement perpendiculairement à la deuxième direction d'évacuation des copeaux entre la première surface latérale (11) et la deuxième surface latérale (12).

2. Plaquette de coupe amovible selon la revendication 1, **caractérisée en ce que** la plaquette de coupe amovible (1) est essentiellement symétrique par rapport à une médiane (S) associée à la saillie de coupe (2), de sorte que par une rotation de 180° de la plaquette de coupe amovible (1) autour de la médiane (S), la plaquette de coupe amovible (1) puisse être reproduite en soi.

3. Plaquette de coupe amovible selon la revendication 1 ou 2, **caractérisée en ce qu'**une base de dent (Z1) disposée sur la première surface latérale (11) de la première dent de coupe (21) et/ou une base de dent (Z2) disposée sur la deuxième surface latérale (12) de la deuxième dent de coupe (22) se situe au moins en partie en dehors de la région de la deuxième ou de la première surface de guidage des copeaux (42, 41).

4. Plaquette de coupe amovible selon la revendication 1, 2 ou 3, **caractérisée en ce que** les dents de coupe (21, 22) sont disposées de telle sorte qu'une direction d'évacuation des copeaux (A1) de la première dent de coupe (21) soit essentiellement parallèle à la deuxième surface latérale (12) et qu'une direction d'évacuation des copeaux de la deuxième dent de coupe soit essentiellement parallèle à la première surface latérale (11).

5. Plaquette de coupe amovible selon la revendication 4, **caractérisée en ce que** la première surface de guidage des copeaux (41) s'étend essentiellement perpendiculairement à la deuxième surface latérale (12) et/ou la deuxième surface de guidage des copeaux (42) s'étend essentiellement perpendiculairement à la première surface latérale (11).

6. Plaquette de coupe amovible selon l'une quelconque des revendications 1 à 5, **caractérisée en ce que** les pointes de la première et/ou de la deuxième dent de coupe (21, 22) se situent essentiellement dans un plan de la première ou de la deuxième surface latérale (11, 12) de la saillie de coupe.

7. Plaquette de coupe amovible selon l'une quelconque des revendications 1 à 6, **caractérisée en ce que** la première et la deuxième surface latérale (11, 12) présentent à chaque fois au moins une surface d'appui (110, 120) pour un porte-outil.

8. Plaquette de coupe amovible selon l'une quelconque des revendications 1 à 7, **caractérisée en ce que** la surface de guidage des copeaux (41, 42) comprend au moins une surface de guidage (410, 420) biseautée se raccordant à l'arête de coupe (31, 32) dans la direction d'évacuation des copeaux (A1) et une surface de guidage concave (412, 422).

9. Plaquette de coupe amovible selon l'une quelconque des revendications 1 à 8, **caractérisée en ce qu'**entre au moins une dent de coupe (21, 22) et la surface latérale associée (11, 12) est formée une dent de coupe auxiliaire (23, 24).

10. Plaquette de coupe amovible selon l'une quelconque des revendications 1 à 9, **caractérisée en ce que** les arêtes de coupe sont formées en tant qu'arêtes de coupe à profil rainuré, en particulier sous forme d'arêtes de coupe à profil fileté, pour la fabrication d'un filetage par usinage par tournage ou fraisage.

11. Plaquette de coupe amovible selon l'une quelconque des revendications 1 à 10, **caractérisée en ce qu'**une arête de coupe (31) est disposée d'un côté de la première et/ou de la deuxième dent de coupe (21, 22) et la deuxième arête de coupe (32) est disposée sur l'autre côté de la même dent de coupe (21,22).

12. Outil comprenant un porte-outil et une plaquette de coupe amovible selon l'une quelconque des revendications 1 à 11, dans lequel la plaquette de coupe amovible (1) peut être tournée pour varier au moins entre une utilisation de la première dent de coupe (21) dans une position d'utilisation et une utilisation de la deuxième dent de coupe (22) dans une position d'utilisation.

13. Outil selon la revendication 12, **caractérisé en ce que** la surface de plaquette (10b, 10a) de la plaquette de coupe amovible (1) opposée à l'arête de coupe (31, 32) repose au moins en partie dans une base de dent (Z1, Z2) d'une dent de coupe (21, 22) dans la position d'utilisation sur le porte-outil (61) et/ou sur une enclume (63).

14. Outil selon la revendication 12 ou 13, comprenant une enclume (63) essentiellement triangulaire, un coin (630) de l'enclume associé à la dent de coupe (21, 22) se trouvant dans la position d'utilisation étant aplati.

15. Procédé de fabrication d'une plaquette de coupe amovible comprenant une première et une deuxième surface de plaquette (10a, 10b) de forme essentiellement triangulaire et trois surfaces latérales (11, 12, 13), une saillie de coupe (2) étant formée dans au moins une région de coin entre une première et une deuxième surface latérale (11, 12), laquelle comprend une première arête de coupe (31) disposée au niveau d'une région de transition à la première surface de plaquette (10a) et une deuxième arête de coupe (32) disposée sur une région de transition à la deuxième surface de plaquette (10b),
**caractérisé en ce que**
la saillie de coupe (2) est formée essentiellement en forme de M avec au moins une première et une deuxième dent de coupe (21, 22), une première arête de coupe (31) étant façonnée au moins sur la première dent de coupe (21) au niveau d'une région de transition à la première surface de plaquette (10a) et une deuxième arête de coupe (32) étant façonnée au moins sur la deuxième dent de coupe (22) au niveau d'une région de transition à la deuxième surface de plaquette (10b), une première direction d'évacuation des copeaux (A1) associée à la première arête de coupe (31) formant un angle avec une deuxième direction d'évacuation des copeaux associée à la deuxième arête de coupe (32) et la première et la deuxième arête de coupe (31, 32) étant associées à une première ou une deuxième surface de guidage des copeaux (41, 42) dans la direction d'évacuation des copeaux,
la première surface de guidage des copeaux (41) étant formée avec au moins une première rainure sur la première surface de plaquette (10a), laquelle s'étend essentiellement perpendiculairement à la première direction d'évacuation des copeaux (A1) entre la première surface latérale (11) et la deuxième surface latérale (12), et
la deuxième surface de guidage des copeaux (42) étant formée avec au moins une deuxième rainure sur la deuxième surface de plaquette (10b), laquelle s'étend essentiellement perpendiculairement à la deuxième direction d'évacuation des copeaux entre la première surface latérale (11) et la deuxième surface latérale (12).
